# EUROPEAN PATENT APPLICATION

(11) **EP 2 674 691 A2**
(43) Date of publication of application: **18.12.2013**
(21) Application number: 13386020.5
(22) Date of filing: 10.06.2013
(51) Int. Cl.: F24J 2/46

(54) **Composite casing for thermal solar panel**

(30) Priority: 12.06.2012 GR 20120100313
(71) Applicant: Cicero Hellas Industrial Commercial and Technical Société Anonyme with the distinctive title Calpak SA, 11743 Athens (GR)
(72) Inventor: Scourboutis, Eugene, 10681 Athens (GR); Van Dyck, Johan, 2900 Schoten (BE); Konstantinidis, Konstantinos, 18533 Peiraeus (GR)
(74) Representative: Pinatsis, Nikolaos

(57) **Abstract**

The invention pertains to a configuration and method of production for a composite casing for a solar panel for heating water comprising a crystal [1], a shell comprising different materials [10, 11, 14] and a thermoset polymer [12] joining them.

This configuration abolishes the adhesive substances and the mechanical fastening methods traditionally used in the production of thermal solar heater casings and can be implemented regardless of the technology used to convert solar radiation to thermal energy.

The preassembled collector is placed on an open mold [15] with a cavity around the crystal. A mixing head [16] traces the periphery of the crystal [1] and deposits a polyurethane based thermoset polymer [12] which occupies the space between the crystal and the other components joining them permanently and sealing the collector in one assembly step.

## Description

### Field of the invention

The invention pertains to a configuration and method of production of a solar panel for heating water comprising different materials joined by a thermoset polymer regardless of the technology used to convert solar radiation to thermal energy.

### State of the art

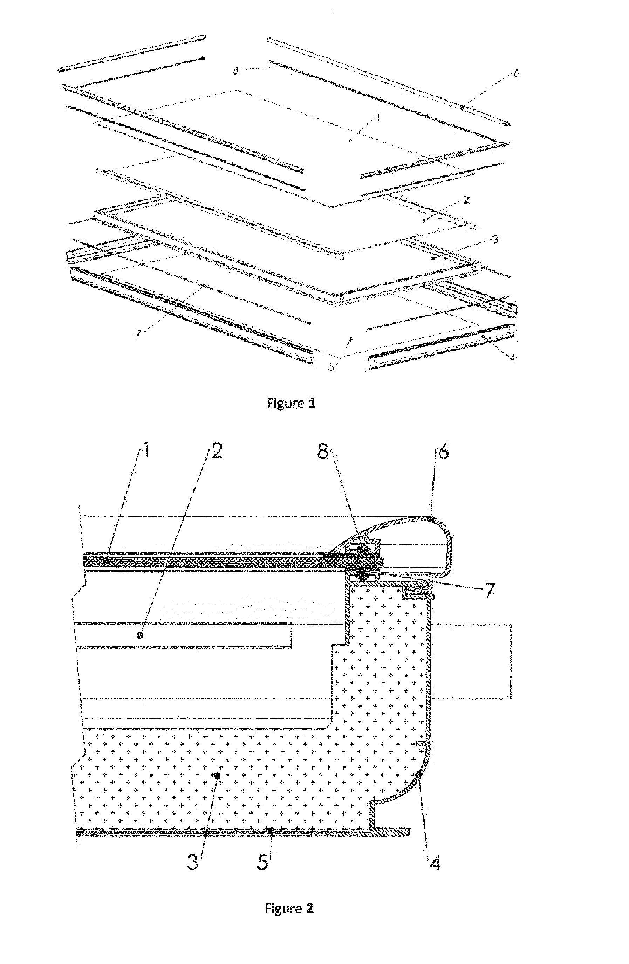

A typical solar panel for heating water comprises the following basic components as shown in figures 1-2:
1. The crystal [1], which allows solar radiation to enter the collector and at the same time protects from weather conditions and the environment.
2. The absorber [2], which includes the water circuit and which converts solar radiation to heat and transfers it to the water circuit. The type of panel is defined by the technology of the absorber. The employment of different types of absorber for the same casing design is possible and commonplace.
3. The insulation [3], which aims at the minimization of thermal heat loss to the environment and which can be in the form of sheets, fibers or even molded.
4. The shell which, when joined to the crystal, encompasses and connects all other components forming a rigid and sealed casing. The most common configuration for the shell is a frame composed of extrude aluminium sections [4] joined to a thin sheet of aluminium, steel or plastic [5] at the back of the collector, aiming at forming a hollow shape. Less common is the construction of the shell from a single sheet of aluminium formed under pressure. In this case the use of extruded aluminium sections around the periphery of the shell is commonplace.

The critical step in the assembly sequence of a panel is the joining of the crystal to the preassembled shell in order to form the casing. The absorber is supported by the tubes which pass through the shell while the insulation is contained in the empty space between the shell and the absorber. The joint between the crystal and the shell is what essentially completes the casing and imparts to the panel the necessary strength against mechanical loading and weatherproofness.

Both mechanical and adhesive means are utilised in this joint. The design of the sections constituting the shell frame provides channels for the deposition of adhesives [7], while a secondary aluminium section [6], is utilized both for the mechanical retention of the crystal as well as for cosmetic purposes. Furthermore the use of rubber sections [8], between the crystal and the secondary section is commonplace for sealing the casing and protecting the crystal.

In the case that the shell comprises a single sheet of aluminium formed into a concave shape the means of joining the crystal remains the same. An aluminium section is joined mechanically in the periphery of the lip of the shell to offer the necessary channels for adhesive deposition and for joining of the crystal retention section.

The drawbacks of such configurations are numerous and are related both to the final product as well as its method of production.
1. Due to the numerous components and their configuration, the complexity of the assembly sequence is high resulting in difficulties in standardisation/automation, high costs and relatively high defective products.
2. The rigidity and longevity of the joint is influenced greatly by the accuracy of the assembly.
3. Due to the complexity of the configuration gaps between components are commonplace resulting in a poor seal as well as reducing the aesthetic value of the product.
4. The ability to create alternative panel shapes is very limited due to the employment of extruded sections. Even if the shell of the panel is of rounded geometry the plan view is rectangular.
5. The use of alternative materials for the cost differentiation of a certain configuration is very limited.
6. Due to the employment of extruded sections the representation of embossed information on the panel casing is impossible.

### Disclosure of the invention

The invention pertains a configuration in which part of the casing consists of a thermoset polymer joining the crystal and the materials conventionally used in the construction of the panel shell. The configuration utilizes established molding methods on an open mold and takes advantage of the mechanical and chemical properties of thermoset polymers to address the problems of current systems and allow greater design freedom.

Thermoset polymers based on polyurethane can adhere on crystal, plastics and metals that have received surface treatment such as steel and aluminium. At the same time they can exhibit, depending on their composition, superior mechanical strength. These properties allow their use as a joining material in the construction of a solar panel casing from conventional materials, joining a composite shell to the crystal and permanently sealing the panel. The molding of the polymer can be achieved by means of an open mold [15], as is usual with the sealing of cars in the automotive industry. The preassembled panel is placed, crystal downwards, on an open mold which contains a cavity located in the periphery of the panel with the desired geometry for the thermoset polymer. A mixing/spraying head [16] traces the periphery of the mold and sprays the thermoset polymer in liquid form which occupies the space between the crystal and the shell as well as the mold cavity, sealing the panel and completing the assembly in one step.

The advantages of this configuration over conventional ones are the following and pertain both the reduction in cost, as well as the increase in quality, functionality and aesthetics of the panel.
1. Strong and durable joint between the crystal and the panel shell.
2. Strong and light panel casing.
3. Ability to use different materials such as plastic, aluminium and steel for the same configuration.
4. Total panel sealing.
5. Abolishing components.
6. Simplification and shortening of the panel production and assembly procedure.
7. Greater ability for automation.
8. More consistent quality and fewer defective products.
9. Greater freedom in designing the panel, e.g. rounded corners and non rectangular shapes in plan view.
10. Ability to integrate inserts in the thermoset polymer for connecting the panel with other panels or support frames.
11. Ability to integrate design features in the thermoset for connecting the panel with other panels or support frames [e.g. holes, bosses]
12. Ability to integrate embossed information on the panel.
13. Simplification of the appearance of the panel.
14. Ability to change the color of the polymer part of the panel without the need for painting.

### Brief description of figures

Figure 1 represents a solar panel with conventional casing in exploded view.
Figure 2 represents a partial section of a conventional solar panel.
Figure 3 represents the plan [top] and side view of a solar panel with composite casing comprising a thermoset polymer, folded sheet metal and thermoplastic corner inserts.
Figure 4 represents the bottom view of a solar panel with composite casing comprising a thermoset polymer, folded sheet metal and thermoplastic corner inserts.
Figure 5 represents a solar panel with composite casing comprising a thermoset polymer, folded sheet metal and thermoplastic corner inserts in exploded view.
Figure 6 represents a partial section of a solar panel with composite casing comprising a thermoset polymer, folded sheet metal and thermoplastic corner inserts.
Figure 7 represents the plan [top] and side view of a solar panel with composite casing comprising a thermoset polymer and aluminium sheet formed by pressure.
Figure 8 represents the bottom view of a solar panel with composite casing comprising a thermoset polymer and aluminium sheet formed by pressure.
Figure 9 represents a solar panel with composite casing comprising a thermoset polymer and aluminium sheet formed by pressure in exploded view.
Figure 10 represents a partial section of a solar panel with composite casing comprising a thermoset polymer and aluminium sheet formed by pressure.

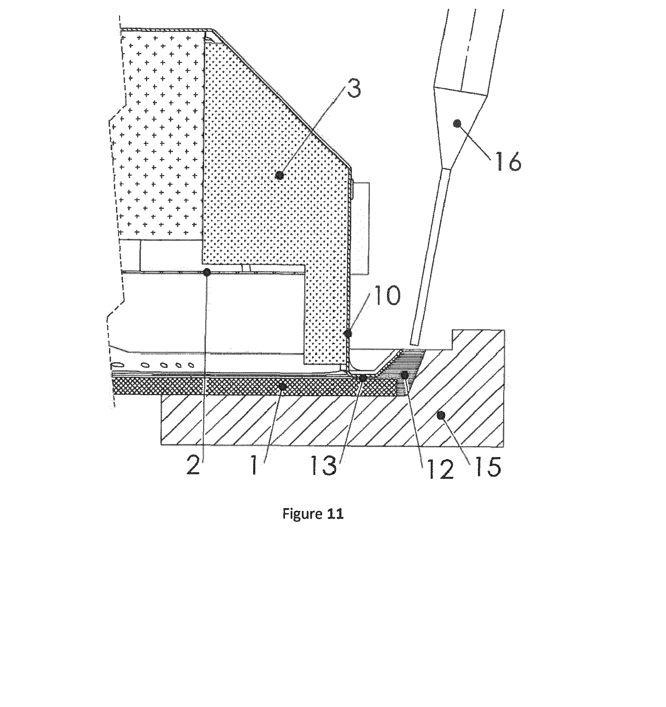

Figure 11 represents a partial section of a solar panel with composite casing comprising a thermoset polymer, folded sheet metal and thermoplastic corner inserts placed on the mold during the polymer molding process.

### Detailed description of two preferred embodiments

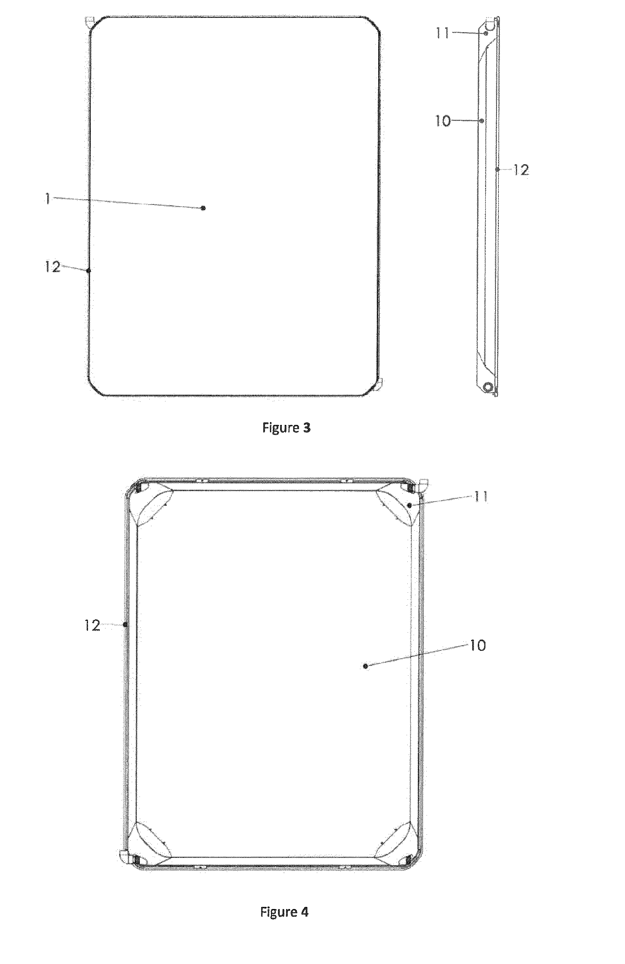

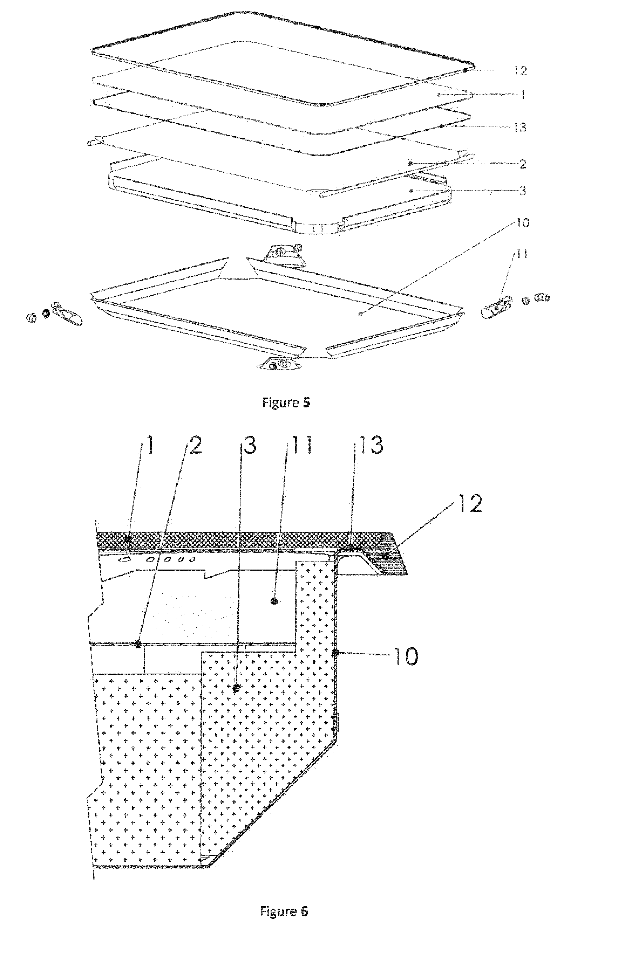

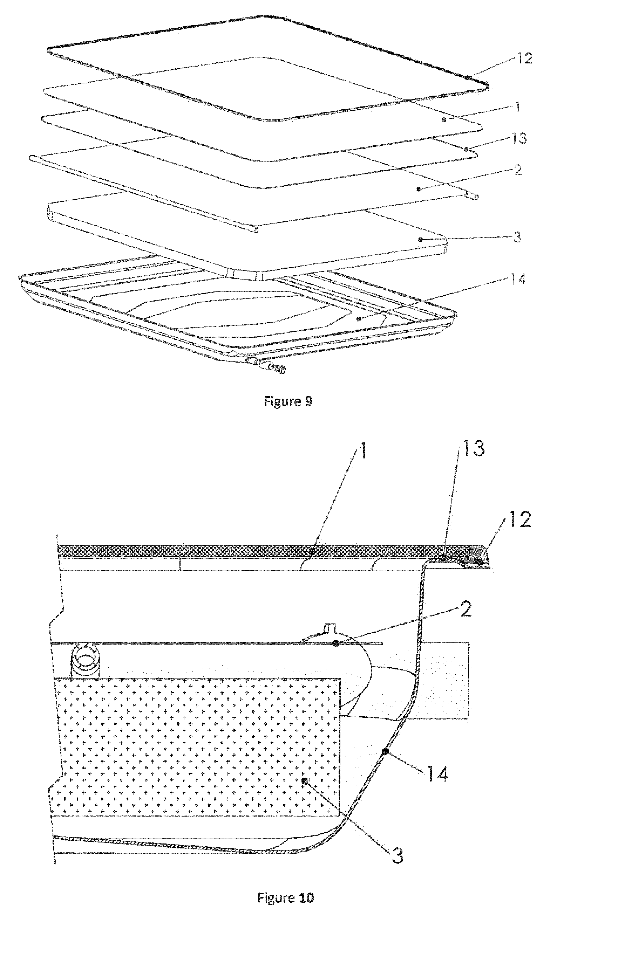

Two preferred embodiments of a solar panel with composite casing from thermoset polymer will be presented below with reference to the attached figures 3-10.

The first embodiment pertains a composite casing comprising a crystal [1], polyurethane based thermoset polymer [12] and a composite shell comprising folded sheet metal from either aluminium or steel [10] and injection molded thermoplastic insert corners [11] and is represented in figures 3-6.

The sheet metal is bent in such a way so that it can support the crystal [1] and at the same time form a wedge shaped cavity with it, in which the thermoset polymer can enter so that it comes in contact with both components and join them permanently.

The same joint geometry is utilized in the four corners of the shell where the thermoset polymer joins the crystal with the insert corners from thermoplastic polymer.

An adhesive tape [13] is utilized between the crystal and the sheet metal to facilitate assembly and to prevent the thermoset polymer from entering the inside of the panel.

The geometry of the free side of the thermoset polymer is free to be determined by the shape of the cavity of the mold, mainly according to aesthetic reasons.

The preassembled panel is placed crystal down on the open mold [15] which contains a cavity in the periphery of the panel with the desired geometry for the thermoset polymer. A mixing head [16] traces the periphery of the mold and sprays the thermoset polymer in liquid form sealing the panel and completing the assembly in one step.

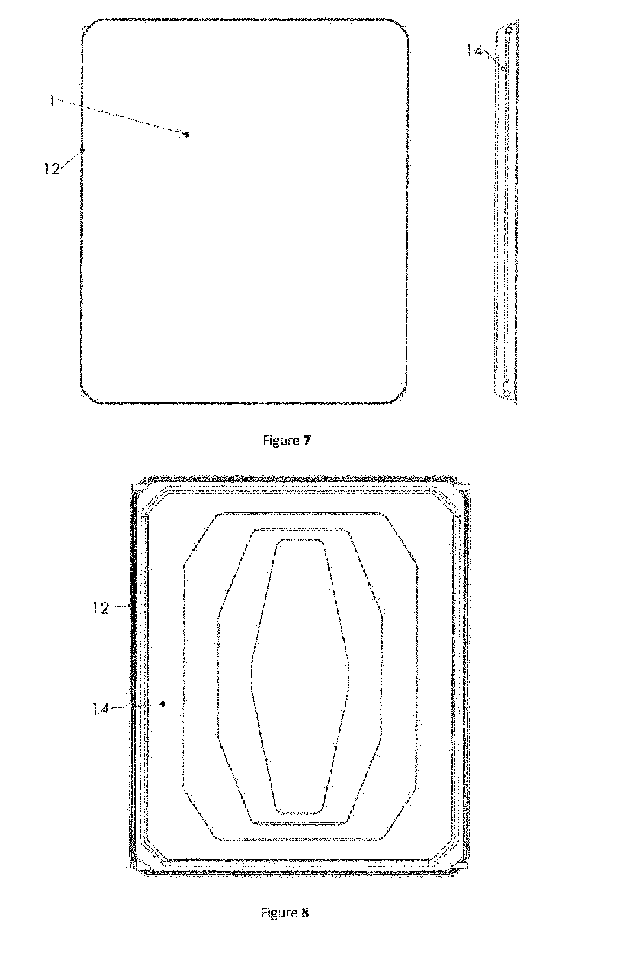

The second embodiment of the invention pertains to a composite casing comprising a crystal, thermoset polymer and a sheet of aluminium formed into a convex shell by pressure [14] and is represented in figures 7-10.

The configuration and geometry of the joint between the crystal, the thermoset polymer and the shell are exactly the same and the only differentiation lies in the composition and shape of the shell. The molding process is also identical.

## Claims

1. Composite casing for a solar panel for heating water partly composed by a thermoset polymer molded during the assembly process in an open mold.

2. Composite casing for a solar panel for heating water according to claim 1 where the thermoset polymer is polyurethane based.

3. Composite casing for a solar panel for heating water according to claim 1 where the joint between the crystal and the components of the shell is realized by means of the thermoset polymer.

4. Composite casing for a solar panel for heating water according to claim 3 where the thermoset polymer is polyurethane based.

5. Composite casing for a solar panel for heating water according to claim 1 or 2 or 3 or 4 with a shell consisting of aluminium sections and a metal or plastic sheet.

6. Composite casing for a solar panel for heating water according to claim 1 or 2 or 3 or 4 with a shell consisting of sheet steel.

7. Composite casing for a solar panel for heating water according to claim 6 with insert corners from molded polymer or cast metal or sheet metal bent or formed by pressure.

8. Composite casing for a solar panel for heating water according to any of the preceding claims with non rectangular plan view.

9. Composite casing for a solar panel for heating water according to any of the preceding claims with inserts in the thermoset polymer for connection with other systems.

10. Composite casing for a solar panel for heating water according to any of the preceding claims with geometric features integrated into the thermoset polymer for connection with other systems.

11. Composite casing for a solar panel for heating water according to any of the preceding claims with embossed symbols or writing on the thermoset polymer.

12. Method of production of a solar panel for heating water with composite casing comprising the following steps:
- Assembly of solar panel shell.
- Assembly of absorber and insulation inside the panel shell.
- Temporary assembly of crystal on panel shell.
- Placement, with crystal downwards, of preassembled collector on an open mold which carries a cavity for molding polymer in the periphery of the glass.
- Spraying of thermoset polymer in the mold cavity in the periphery of the glass so that the thermoset polymer occupies the empty space between the crystal and the shell, as well as the mold cavity, sealing permanently the panel casing and completing its assembly.

13. Method of production of a solar panel for heating water with composite casing according to claim 12 where the mold cavity contains cavities for the creation of geometric features for connection of the panel with other systems.

14. Method of production of a solar panel for heating water with composite casing according to claim 12 or 13 where inserts are placed in the mold cavity or in cavities formed by the panel shell for connection of the panel with other systems.

15. Method of production of a solar panel for heating water with composite casing according to claim 12 or 13 or 14 where the mold cavity contains cavities for the creation of embossed symbols or writing.
